# EUROPEAN PATENT APPLICATION

(11) **EP 4 838 888 A1**
(43) Date of publication of application: **11.11.2026**
(21) Application number: 24916496.3
(22) Date of filing: 15.10.2024
(51) Int. Cl.: H04N 19/46

(54) **VIDEO PROCESSING METHOD, DEVICE, AND STORAGE MEDIUM**

(30) Priority: 09.01.2024 CN 202410040181
(71) Applicant: ZTE Corporation, Shenzhen, Guangdong 518057 (CN)
(72) Inventor: GAO, Ying, Shenzhen, Guangdong 518057 (CN); WU, Ping, Shenzhen, Guangdong 518057 (CN); BAI, Yaxian, Shenzhen, Guangdong 518057 (CN); XIE, Shaowei, Shenzhen, Guangdong 518057 (CN); JIA, Menghu, Shenzhen, Guangdong 518057 (CN); HUANG, Cheng, Shenzhen, Guangdong 518057 (CN)
(74) Representative: Savi, Massimiliano
(86) International application number: PCT/CN2024/124903
(87) International publication number: WO 2025/148445

(57) **Abstract**

A method for video processing, a device, and a storage medium. The method includes, receiving (S110) a video picture bitstream along with first order indication information corresponding to the video picture bitstream; wherein the first order indication information is indicative of a processing order of each of a plurality of messages in a message set that comprises one or more first-type messages; determining (S120) a message processing rule for each message associated with the first order indication information, in response to determining that at least one of the one or more first-type messages has processing failure; processing (S130) the first order indication information according to the message processing rule; and processing (S140) the video picture bitstream according to the processed first order indication information.

## Description

### TECHNICAL FIELD

The present invention relates to the field of video processing, and in particular to, a method for video processing, a device, and a storage medium.

### BACKGROUND

A bitstream comprises a series of bits for video picture data transmission. The bitstream may be transmitted between an encoder and a decoder. The video picture data is compressed by the encoder through an encoding process to form the bitstream. The video picture data is restored and reconstructed from the bitstream by the decoder through a decoding process. Appropriate video encoding and decoding standards are typically established by standard organizations. The encoding process of the encoder and the decoding process of the decoder are guided by the standards. Accordingly, the bitstream obtained by compressing and encoding the video picture data by means of the encoder can be correctly decoded by different decoders. During encoding and decoding in accordance with the H.26x series standards, a bitstream includes a series of bits in the form of a Network Abstract Layer (NAL) unit stream or a Byte Stream, to form a sequence of Access Units (AU) of one or more Coded Video Sequences (CVS).

A Supplemental Enhancement Information (SEI) message is one of the features of the H.26x series standards. A method for inserting information into a video bitstream (or a video and picture bitstream) is provided by the SEI message. The primary purpose is to provide assistance during decoding, displaying, or other related processes. Escalating demands are placed as more SEI message types are specified in the standards. Different types of SEI messages are processed in different chronological orders. Different qualities of the finally decoded video picture or different video viewing experiences for the user may be resulted from the different chronological processing orders.

A new SEI message type, namely an SEI processing order SEI message, is newly introduced to the H.26x series standards. The SEI processing order SEI message is configured to indicate a preferred processing order among a plurality of SEI messages of the same type or different types. An importance flag (e.g., *po_sei_importance_flag*) can be appended to the SEI processing order SEI message. The importance flag is configured to indicate if the SEI message corresponding to the flag is important. However, an entire SEI processing order SEI message should be ignored, provided that an SEI message is important (*po_sei_importance_flag =* 1) and the important SEI message cannot be parsed or processed by a decoder side. Ignoring the entire SEI processing order due to a processing failure of a single SEI message is an overly simplistic approach that lacks both rationality and flexibility.

### SUMMARY

In view of the issues discussed above, a method for video processing, a device, and a storage medium are provided according to the embodiments of the present invention, to achieve flexible and effective message processing.

According to an embodiment of the present invention, a method for video processing applied to a decoder is provided. The method includes:
- receiving a video picture bitstream along with first order indication information corresponding to the video picture bitstream; wherein the first order indication information is indicative of a processing order of each of a plurality of messages in a message set that comprises one or more first-type messages;
- determining a message processing rule for each message associated with the first order indication information, in response to determining that at least one of the one or more first-type messages has processing failure;
- processing the first order indication information according to the message processing rule; and
- processing the video picture bitstream according to the processed first order indication information.

According to an embodiment of the present invention, a method for video processing applied to an encoder is provided. The method includes:
- determining a processing order for each of a plurality of messages in a message set associated with a source picture;
- determining a respective first order indication information based on a processing order of each of the messages; where the first order indication information is indicative of a processing order of each of the plurality of messages in the message set that includes at least one first-type message; and
- appending the first order indication information to a video picture bitstream corresponding to the source picture, and transmitting the video picture bitstream to a decoder side.

According to an embodiment of the present invention, a communication apparatus is provided. The apparatus includes a memory and one or more processors; the memory is configured to store at least one program which, when executed by the at least one processor, causes the at least one processor to carry out any one of the methods as described above.

An embodiment of the present invention provides a computer-readable storage medium storing a computer program which, when executed by a processor, causes the processor to carry out the method as described in any one embodiment as described above.

### BRIEF DESCRIPTION OF DRAWINGS

FIG. la depicts a schematic diagram illustrating an implementation of a processing order of SEI messages set forth in the related art;
FIG. 1b depicts a schematic diagram illustrating an implementation of a processing order of SEI messages according to an embodiment of the present invention;
FIG. 2 depicts a flowchart illustrating a method for video processing according to an embodiment of the present invention;
FIG. 3 depicts a flowchart illustrating a method for video processing according to another embodiment of the present invention;
FIG. 4 depicts a flowchart illustrating a method for video processing applied to a decoder side according to an embodiment of the present invention;
FIG. 5 depicts a flowchart illustrating a method for video processing applied to an encoder side according to an embodiment of the present invention;
FIG. 6 depicts a schematic block diagram showing a device for video processing according to an embodiment of the present invention;
FIG. 7 depicts a schematic block diagram showing a device for video processing according to another embodiment of the present invention; and
FIG. 8 depicts a schematic diagram showing a communication apparatus according to an embodiment of the present invention.

### DETAILED DESCRIPTION

Some embodiments of the present invention will be further illustrated with reference to the drawings. Some embodiments of the present invention will be described below with reference to the accompanying drawings. It should be understood that the embodiments described herein are intended only for illustration of the present invention, but are not intended for limitations to the present invention.

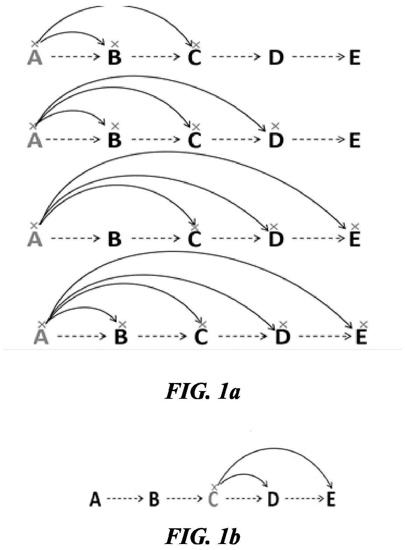

FIG. 1a depicts a schematic diagram illustrating an implementation of a processing order of SEI messages set forth in the related art. FIG. 1b depicts a schematic diagram illustrating an implementation of a processing order of SEI messages according to an embodiment of the present invention. As shown in FIG. 1a, message A is assumed to be an important SEI message, and if the decoding of message A by a decoder side fails, the processing orders of all SEI messages subsequent to message A, such as message B, message C, message D, and message E, are simply ignored/skipped, which lacks rationality and flexibility. As shown in FIG. 1b, message C is assumed to be an important SEI message, and if message C fails to be parsed or processed by the decoder side, the processing orders of message D and message E subsequent to message C may be ignored, whereas message A and message B are still processed according to a pre-configured processing order.

In view of the issues discussed above, flexible and effective indication information for processing orders and processing rule for a plurality of SEI messages is provided by an embodiment of the present invention. The following embodiments will be described with SEI messages by way of example. However, other methods for indicating the processing orders and processing rule among a plurality of SEI messages are not excluded. For instance, the indication may be deployed in file packaging of the bitstream or in a parameter set corresponding to the bitstream.

It should be noted that the message processing rule can also be referred to simply as a processing rule.

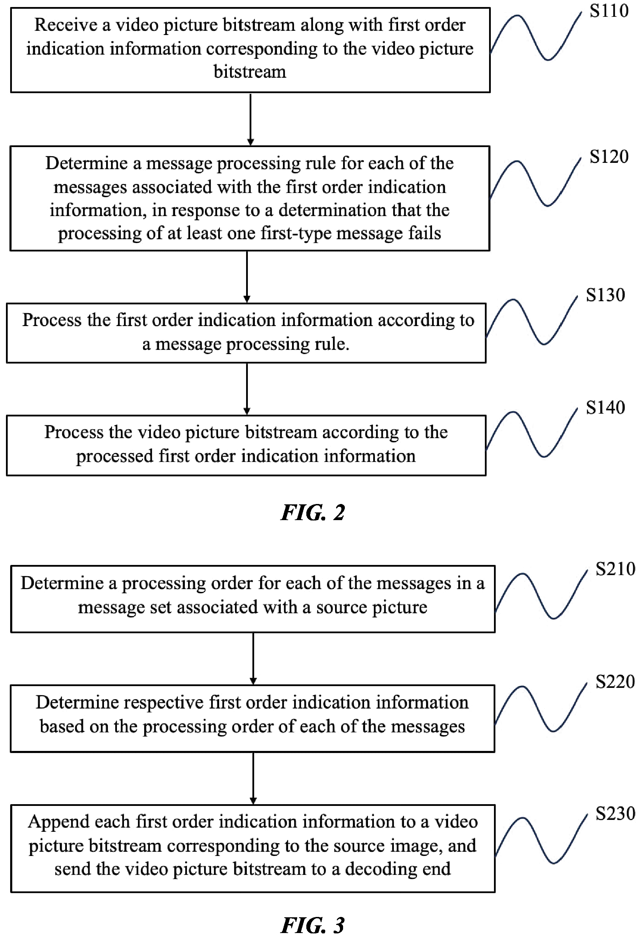

FIG. 2 depicts a flowchart illustrating a method for video processing according to an embodiment of the present invention. This embodiment is applied to a scenario for flexible indications of the processing orders and processing rule of a plurality of SEI messages. The method set forth in this embodiment may be performed by a decoder side. As shown in FIG. 2, the method according to this embodiment includes operations S 110-S 140.

At operation S110, a video picture bitstream is received along with first order indication information corresponding to the video picture bitstream.

The first order indication information is configured to indicate a processing order of each of the messages in a message set that includes at least one first-type message. In an example, the first-type message is an important message in the message set. Each of the messages in the message set can be an SEI message. A plurality of SEI messages may be included in the message set. Moreover, at least one important SEI message is included in the message set. In an example, the message set refers to a set of all SEI messages whose processing orders are indicated in the first order indication information.

At operation S120, a message processing rule is determined for each of the messages associated with the first order indication information, in response to a determination that the processing of at least one first-type message fails.

At operation S130, the first order indication information is processed according to a message processing rule.

At operation S140, the video picture bitstream is processed according to the processed first order indication information.

In an embodiment, the message is a first-type message if the importance flag of the message is a first flag.

The message is a second-type message, if the importance flag of the message is a second flag. An importance flag is indicative of whether a message is important. The first flag and the second flag have two different values. For example, the value of the first flag can be '1', and correspondingly, the value of the second flag can be '0'. A message is indicated as important, if the importance flag of the message is the first flag. A message is indicated as unimportant, if the importance flag of the message is the second flag.

In an embodiment, determining the message processing rule for each of the messages associated with the first order indication information includes at least one of:
determining the message processing rule for each associated message according to a processing type contained in the first order indication information;
determining the message processing rule for each associated message according to a dependency contained in the first order indication information;
determining the message processing rule for each associated message according to a dependency strength on the first-type message in the first order indication information;
determining the message processing rule for each associated message according to grouping information contained in the first order indication information; or
determining the message processing rule for each associated message according to an importance degree flag contained in the first order indication information.

In an example, the message processing rule can be determined according to the processing type contained in the first order indication information. The processing type is indicative of the message processing rule for other messages in the message set, if the processing on the first-type message fails.

In an example, the message processing rule can also be determined according to the dependency contained in the first order indication information. The dependency is indicative of a dependency between different types of messages. The dependency is indicative of whether the messages associated with the dependency depends on the corresponding first-type message, or is indicative of the first-type message upon which the message associated with the dependency depends.

In an example, the message processing rule may also be determined according to the dependency strength on the first-type message contained in the first order indication information. The dependency strength on the first-type message is indicative of the dependency strength of the subsequent messages in the processing order on the first-type message associated with the dependency strength.

In an example, the message processing rule may also be determined according to the grouping information contained in the first order indication information. The grouping information is indicative of a group in which different types of messages are grouped.

In an example, the message processing rule may also be determined according to the importance degree flag in the first order indication information. The importance flag is indicative of an importance of each first-type message.

In an embodiment, processing the first order indication information according to the message processing rule includes:
- ignoring a processing order of each message having a process order subsequent to the first-type message associated with the first order indication information, in response to determining that the processing type in the first order indication information is associated with the first flag and the processing on the first-type message fails; and
- ignoring the entire first order indication information, in response to determining that the processing type in the first order indication information is associated with the second flag and the processing on the first-type message fails. In an example, the value of the first flag may be '1', and the value of the second flag may be '0'. In an example, with the condition that a value of the processing type of one first-type message among messages associated with the first order indication information is '0' and the processing on the first-type message fails, the entire first order indication information is ignored. That is, the processing orders among all messages associated with the first order indication information are ignored. In an example, with the condition that the value of the processing type of one first-type message among messages associated with the first order indication information is '1' and the processing on the first-type message fails, in the first order indication information, all messages having processing orders subsequent to the first-type message on which the processing fails are ignored. Alternatively, the processing orders of all messages in the first order indication information having processing orders subsequent to the first-type message on which the processing fails are ignored.

In an embodiment, processing the first order indication information according to the message processing rule includes:
in case that the processing type in the first order indication information is indicated by the first flag and an encapsulation flag is the second flag, preserving the processing orders of messages having processing orders prior to the processing order of the first-type message in the first order indication information, if the processing on the first-type message fails;
ignoring the first-type message in the first order indication information, if the processing on the first-type message fails with the condition that the processing type in the first order indication information is indicated by the first flag and the encapsulation flag is the first flag;
ignoring the entire first order indication information, if the processing on a first-type message fails with the condition that the processing type in the first order indication information is indicated by the second flag. In an example, the encapsulation flag is indicative of whether a message is encapsulated in an SEI processing order nesting SEI message corresponding to the SEI processing order SEI message. In an example, under the condition that the encapsulation flag is the first flag, the related message is encapsulated in the SEI processing order nesting SEI message corresponding to the SEI processing order SEI message. Alternatively, under the condition that the encapsulation flag is the second flag, the related message is not encapsulated in the SEI processing order nesting SEI message corresponding to the SEI processing order SEI message. In an example, under the condition that the processing type of one first-type message among messages associated with the first order indication information is indicated by the first flag, the first-type message is not encapsulated (that is, the encapsulation flag of the first-type message is the second flag), and the processing on the first-type message fails, the processing orders of all messages prior to the processing order corresponding to the first-type message in the first order indication information can be preserved. In an example, under the condition that the processing type of one first-type message among messages associated with the first order indication information is indicated by the first flag, the first-type message is encapsulated (that is, the encapsulation flag of the first-type message is the first flag), and the processing on the first-type message fails, the first-type message on which the processing fails among the messages associated with the first order indication information can be ignored. Alternatively, the processing order of the first-type message having processing failure among the messages associated with the first order indication information is ignored. In an example, under the condition that the processing type of one first-type message among messages associated with the first order indication information is the second flag and the first-type message has processing failure, processing orders of all messages associated with the first order indication information can be ignored.

In an embodiment, processing the first order indication information according to the message processing rule includes: ignoring the processing orders of all messages having a dependency with the first-type message in the first order indication information, under the condition that the first-type message associated with the first order indication information has processing failure. In an example, under the condition that no dependency exists between a message and the first-type message, the message is still processed according to a pre-configured processing order even if the first-type message has processing failure. In an example, each message having a dependency with the first-type message is ignored, or processing order of each message having a dependency with the first-type message is ignored, under the condition that a dependency existing between the respective message and the first-type message and the first-type message has processing failure.

In an embodiment, processing the first order indication information according to the message processing rule includes:
ignoring processing orders of a first number of messages subsequent to the first-type message in the first order indication information, under the condition that a dependency strength on the first-type message associated with the first order indication information is indicated by the second flag;
ignoring the entire first order indication information, under the condition that the dependency strength on the first-type message associated with the first order indication information is indicated by the first flag. In an example, the value of the first flag is '1', and the value of the second flag is '0'. In an example, all messages having processing orders subsequent to the first-type message in the first order indication information can be ignored, or processing orders of all messages subsequent to the first-type message in the first order indication information can be ignored, under the condition that the dependency strength on one first-type message associated with the first order indication information is indicated by '1' and the first-type message has processing failure. In an example, a first number of messages having processing orders subsequent to the first-type message in the first order indication information can be ignored, or processing orders of a first number of messages subsequent to the first-type message in the first order indication information can be ignored, under the condition that the dependency strength on one first-type message associated with the first order indication information is indicated by '0' and the first-type message has processing failure.

In an embodiment, processing the first order indication information according to the message processing rule includes: ignoring the processing orders of all messages having the same grouping information corresponding to the first-type message in the first order indication information, under the condition that the first-type message associated with the first order indication information has processing failure. In an example, the grouping information is indicative of a group corresponding to a message. For instance, the grouping information may include a group identifier. That is, messages with the same grouping information can also be understood as messages with the same group identifier. In an example, under the condition that one first-type message associated with the first order indication information has processing failure, all messages having the same group identifier corresponding to the first-type message in the first order indication information can be ignored, or processing orders of all messages having the same group identifier corresponding to the first-type message in the first order indication information can be ignored.

In an embodiment, processing the first order indication information according to the message processing rule includes:
ignoring the entire first order indication information, under the condition that an importance degree flag in the first order indication information is the first flag and the first-type message has processing failure;
preserving the processing orders of messages prior to a processing order corresponding to the first-type message in the first order indication information, or ignoring the processing orders of messages subsequent to the processing order corresponding to the first-type message in the first order indication information, under the condition that the importance degree flag in the first order indication information is the second flag, an encapsulation flag is the second flag, and the first-type message has processing failure;
ignoring the first-type message having processing failure in the first order indication information, under the condition that the importance degree flag in the first order indication information is the second flag, the encapsulation flag is the first flag, and the first-type message has processing failure. In an example, the value of the first flag is '1', and the value of the second flag is '0'. In an example, processing orders of all messages associated with the first order indication information can be ignored, under the condition that the importance degree flag of one first-type message among messages associated with the first order indication information is '1' and the first-type message has processing failure. Processing orders of all messages subsequent to the first-type message in the first order indication information can be ignored, under the condition that the importance degree flag of one first-type message among messages associated with the first order indication information is '0', the first-type message is not encapsulated, and the first-type message has processing failure. That is, the processing order of each message prior to the processing order corresponding to the first-type message among the messages associated with the first order indication information is preserved. In other words, each message with processing order prior to the first-type message is still processed according to a pre-configured processing order. A first-type message having processing failure among the messages associated with the first order indication information can be ignored, under the condition that the importance degree flag of the first-type message among messages associated with the first order indication information is '0', the first-type message is encapsulated, and the first-type message has processing failure.

In an embodiment, the first order indication information includes at least the following parameters: a message identifier, the number of messages, a message nesting situation, an importance flag, a message type, a processing order of a message corresponding to each message type, and an encapsulation flag.

In an embodiment, the first order indication information further includes one of the following parameters: a dependency strength on the first-type message, a dependency, grouping information, a processing type, or an importance degree flag.

FIG. 3 depicts a flowchart illustrating a method for video processing according to an embodiment of the present invention. This embodiment is applied to a scenario for flexible indications of the processing orders and processing rule of a plurality of SEI messages. The method set forth in this embodiment can be performed by an encoder side. As shown in FIG. 3, the method according to this embodiment includes operation S210-S230.

At operation S210, a processing order is determined for each of the messages in a message set associated with a source picture.

At operation S220, respective first order indication information is determined based on the processing order of each of the messages.

The first order indication information is configured to indicate a processing order of each of the messages in a message set that includes at least one first-type message.

At operation S230, the first order indication information is appended to a video picture bitstream corresponding to the source picture, and the video picture bitstream is sent to a decoder side.

In an embodiment, the message is a first-type message if the importance flag of the message is a first flag.

The message is a second-type message, if the importance flag of the message is a second flag.

In an embodiment, a corresponding encapsulation flag is configured for a message having the second flag as the importance flag in the first order indication information. It can be understood that, the message having the second flag as the importance flag is the second-type message. The encapsulation flag is indicative of whether a message is encapsulated in an SEI processing order nesting SEI message corresponding to the SEI processing order SEI message. In an example, the value of an encapsulation flag of a message being '0' indicates that the message exists independently and is not encapsulated in the SEI processing order nesting SEI message corresponding to the SEI processing order SEI message. In an example, the value of an encapsulation flag of a message being '1' indicates that the message is encapsulated in the SEI processing order nesting SEI message corresponding to the SEI processing order SEI message. In an example, a corresponding encapsulation flag can be configured for each message in the first order indication information, or a corresponding encapsulation flag can be configured for the message having a second flag as the importance flag (i.e., the second-type message) in the first order indication information. In an embodiment, a corresponding dependency presence flag is configured as the first flag, under the condition that the number of first-type messages associated with the first order indication information is greater than or equal to 1.

The corresponding dependency presence flag is configured as the second flag, under the condition that no first-type messages are associated with the first order indication information. In an example, the value of the dependency presence flag depends on whether a first-type message exists among all messages associated with the first order indication information. If the number of first-type messages is greater than or equal to 1, the value of the dependency presence flag is set to '1'; if the number of first-type messages is 0, the value of the dependency presence flag is set to '0'.

In an embodiment, a dependency message index of the depended first-type message is configured for a message having a first flag as the dependency flag, under the condition that the number of first-type messages associated with the first order indication information is greater than 1. In an example, the first flag can be '1'. The dependency flag is indicative of a dependency of a message on the first-type message. In an example, a dependency between a message and any one of the first-type messages is indicated by the dependency flag having a value of '1'. In an example, no dependency between a message and any one of the first-type messages is indicated by the dependency flag having a value of '0'. In an example, the dependency message index is indicative of an index corresponding to the first-type message upon which a message depends. Dependency message indices are indicative of indices corresponding to a plurality of first-type messages upon which a message depends, under the condition that the message depends on the plurality of first-type messages.

In an embodiment, a group presence flag is configured as the first flag, under the condition that the number of messages having the first flags as importance flags in the first order indication information is greater than or equal to 1;
the group presence flag is configured as the second flag, under the condition that the number of messages having the first flags as importance flags in the first order indication information is 0. In an example, the value of the first flag is '1', and the value of the second flag is '0'. It can be understood that, a message having the first flag as the importance flag is a first-type message. In an example, the group presence flag may depend on whether a first-type message exists among a plurality of messages associated with the first order indication information. The group presence flag is configured to be '1' if a first-type message exists. The group presence flag is configured to be '0' if no first-type message exists.

In an embodiment, a group identifier is configured for each message under the condition that the the group presence flag is the first flag. Specifically, at least one first-type message is included in a group corresponding to each group identifier. The group identifier is indicative of the number of a group to which a message is grouped.

In an embodiment, a corresponding importance degree flag is configured for the first-type message having a second flag as the encapsulation flag.

In an embodiment, the first order indication information includes at least the following parameters: a message identifier, the number of messages, a message nesting situation, an importance flag, a message type, a processing order of a message corresponding to each message type, and an encapsulation flag.

In an embodiment, the first order indication information further includes one of the following parameters: a dependency strength on the first-type message, a dependency, grouping information, a processing type, or an importance degree flag.

It should be noted that for explanations of terms such as the first order indication information, the first-type message, the second-type message, the first flag, the second flag, the importance flag, the importance degree flag, the grouping information, and the dependency strength on the first-type message described with respect to the method for video processing applied to the encoder side, reference can be made to descriptions of corresponding terms with respect to the method for video processing applied to the decoder side described above, and which will not be repeated here.

In the following Embodiments 1 to 7, a description is provided on the method for video processing by taking the following as an example: each message in the message set can be an SEI message; the first-type message refers to an important SEI message (i.e., an SEI message with the value of an importance flag set to 'true' or '1'); the second-type message refers to an unimportant SEI message (i.e., an SEI message with the value of an importance flag set to 'false' or '0'); the dependency strength on the first-type message is referred to as a dependency strength on the important SEI message; the first order indication information is referred to as SEI processing order indication information, or an SEI processing order SEI message; and the processing order can also be referred to as a preferred processing order.

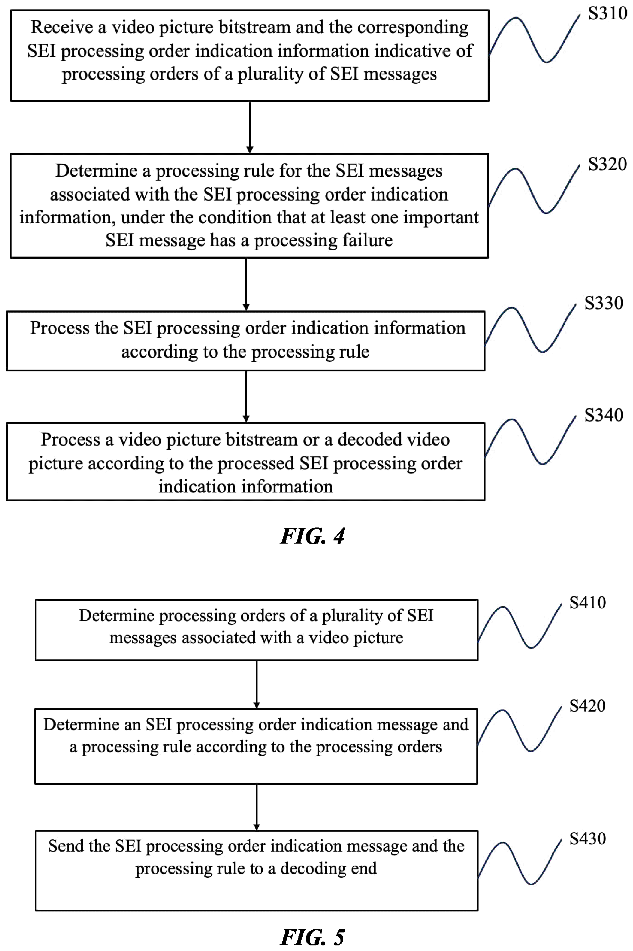

FIG. 4 depicts a flowchart illustrating a method for video processing applied to a decoder side according to a first embodiment of the present invention. This embodiment is applied to an apparatus performing decoding processing on a video bitstream. An input to the apparatus is a video picture bitstream or a media file. An output is a decoded and reconstructed video picture. As shown in FIG. 4, the method of this embodiment includes operations S310 to S340.

At operation S310, a video picture bitstream and the corresponding SEI processing order indication information indicative of processing orders of a plurality of SEI messages are received.

Specifically, at least one important SEI message is included in the plurality of SEI messages. Whether the SEI message is important is determined according to the importance flag of the SEI message included in the SEI processing order indication information. For example, the SEI message is indicated as important, under the condition that the importance flag of the SEI message is set to be 'true' (e.g., *sei*_*importance_flag* = 1). Conversely, the SEI message is indicated as unimportant, under the condition that the importance flag of the SEI message is set to be 'false' (e.g., *sei_importance_flag =* 0).

At operation S320, a processing rule is determined for the SEI messages associated with the SEI processing order indication information, under the condition that at least one important SEI message has a processing failure.

The processing rule may be determined according to a processing type (e.g., *ProcessingType*) in the SEI processing order indication information. The processing type is indicative of a processing rule for other SEI messages except the important messages, under the condition that an important SEI message (e.g., *sei_importance_flag =* 1) has a processing failure.

The processing rule may also be determined according to a dependency in the SEI processing order indication information. The dependency is indicative of dependencies between different types of SEI messages. The dependency is indicative of whether the SEI messages associated with the dependency depends on the corresponding important SEI message, or is indicative of the important SEI message upon which the SEI message associated with the dependency depends.

The processing rule may also be determined according to a dependency strength on an important SEI message in the SEI processing order indication information. The dependency strength is indicative of a dependency of other SEI messages having processing orders subsequent to a processing order of the important SEI message associated with the dependency strength.

The processing rule may also be determined according to grouping information in the SEI processing order indication information. The grouping information is indicative a respective group to which a respective one of different types of SEI messages is grouped.

The processing rule may also be determined according to the importance degree flags in the SEI processing order indication information. An importance degree flag is indicative an importance of a first-type message.

In addition to any one of the processing rules discussed above, the processing rule can also be any combination of the different processing rules listed above.

It should be noted that different types of SEI messages can include, but are not limited to, one of: SEI messages with different message types (e.g., *Payload Types);* SEI messages with the same message type but not completely identical message contents; or SEI messages with different importance flags, and the like.

At operation S330, the SEI processing order indication information is processed according to the processing rule.

The processing on a plurality of SEI messages associated with the SEI processing order indication information is determined according to the processing rule determined in operation S320, including but not limited to the following.

The processing rule is determined according to the *'ProcessingType'* (or *'process_degree_flag'*). Under the condition that *'ProcessingType'* (or *'process_degree_flag'*) is '1', the entire SEI processing order indication information is ignored if an SEI message having an importance flag set to 'true' has a processing failure. Under the condition that the *'ProcessingType'* (or *'process_degree_flag')* is '0', only processing order of each SEI message subsequent to the SEI message having an importance flag set to 'true' in the SEI processing order indication information is ignored if the SEI message having an importance flag set to 'true' has a processing failure.

In an implementation, the processing rule as discussed above can be achieved by constructing a message processing list (e.g., *PoSeiList*), for example:
The initial *'PoSeiList'* is set to empty.

If a decoding system can parse and support functions indicated by an i-th message *seiA* associated with the SEI processing order indication information, *seiA* is appended to the end of *'PoSeiList'.*

Conversely, construction of *'PoSeiList'* is terminated if the value of *seiA's* importance flag is equal to '1' and the value of the processing type (e.g., *'ProcessingType'* or *'process_degree_flag'*) is equal to '0', when the decoding system fails to parse or support the functions indicated by the i-th message *seiA* associated with the SEI processing order indication information. *'PoSeiList'* is set to empty, and derivation of *'PoSeiList'* is terminated, if the value of *seiA*'s importance flag is equal to '1' and the value of the processing type (e.g., *'ProcessingType'* or *'process_degree_flag'*) is equal to '1'.

It should be noted that the values of processing types above are provided by way of example. It is also possible that, the entire SEI processing order indication information is ignored when the value of processing type is '0', and only processing order in the SEI processing order indication information of each SEI message having processing order subsequent to the SEI message having importance flag set to true is ignored, when the value of processing type is '1'. The same situation applies to subsequent embodiments, and will not be repeated.

When the processing rule is determined according to a dependency between SEI messages, only processing orders in the SEI processing order indication information, of SEI messages having a dependency with the SEI message having an importance flag set to be true are ignored, if the SEI message with an importance flag set to 'true' has a processing failure.

The processing rule is determined according to a dependency strength on an important SEI message. The entire SEI processing order indication information is ignored if the important SEI message associated with the dependency strength has a processing failure and the dependency strength is strong; or only processing orders of a first number of SEI messages in the SEI processing order indication information are ignored if the important SEI message associated with the dependency strength has a processing failure and the dependency strength is not strong. The first number may be carried in the SEI processing order indication information, may be set by a default configuration, or may also be a number of SEI messages between an important SEI message and a subsequent important SEI message.

The processing rule may also be determined according to grouping information in the SEI processing order indication information. Only processing orders of SEI messages having the same grouping information as the important SEI message in the SEI processing order indication information are ignored, if an SEI message having importance flag set to 'true' has a processing failure.

At operation S340, a video picture bitstream or a decoded video picture is processed according to the processed SEI processing order indication information.

The SEI processing order indication information is processed according to any of the processing rules in operation S330 to obtain processed SEI processing order indication information. If processing orders of at least two SEI messages are still indicated in the processed SEI processing order indication information, the video picture bitstream or the decoded video picture is processed according to the processing orders of the at least two SEI messages indicated by the processed SEI processing order indication information. That is, operations corresponding to the at least two SEI messages are respectively performed on the video picture bitstream or the decoded video picture according to the processing orders of the at least two SEI messages.

In a second embodiment, an example of SEI processing order indication information when a processing rule is determined according to a processing type is provided. The SEI processing order indication information is an SEI processing order SEI message.

| | |
|---|---|
| sei_processing_order( payloadSize ) { | **Descriptor** |
| **po_id** | u(8) |
| **po_num_sei_messages_minus2** | u(8) |
| **po_processing_type** | u(1) |
| for( i = 0, i < po_num_sei_messages_minus2 + 2; i++ ) { | |
| **po_sei_wrapping_flag**[ i ] | u(1) |
| **po_sei_importance_flag**[ i ] | u(1) |
| **po_sei_payload_type**[ i ] | u(13) |
| **po_sei_processing_order**[ i ] | u(8) |
| } | |
| ...... | |
| } | |

Semantics:
*po_id*: indicative of an identifier serial number of a SEI processing order SEI message;
*po_num_sei_messages_minus2:* with the value plus '2' indicates a number of SEI message types indicating a preferred processing order in the SEI processing order SEI message;
*po_processing_ type*: indicative of processing rules for the SEI processing order SEI message or other SEI messages associated with the SEI processing order SEI message under the condition that a SEI message of an SEI message type fails to be processed in the SEI processing order SEI message. For example, under the condition that the value of *'po_processing_type'* is set to '1' , the entire SEI processing order SEI message is ignored. That is, preferred processing orders among all SEI message types indicated by the SEI processing order SEI message are ignored. Under the condition that the value of *'po_processing_type'* is set to '0', all SEI messages having processing orders subsequent to a processing order of an SEI message having a processing failure and having importance flag set to 'true' in the SEI processing order indication information are ignored, or processing orders of all SEI messages having processing orders subsequent to a processing order of an SEI message having a processing failure indicated by the SEI processing order indication information are ignored.

| | |
|---|---|
| sei_processing_order( payloadSize ) { | **Descriptor** |
| **po_id** | u(8) |
| **po_num_sei_messages_minus2** | u(8) |
| for( i = 0, i < ponum_sei_messages_minus2 + 2; i++ ) { | |
| **po_sei_wrapping_flag**[ i ] | u(1) |
| **po_sei_importance_flag**[ i ] | u(1) |
| **po_processing_type**[ i ] | |
| **po_sei_payload_type**[ i ] | u(13) |
| **po_sei_processing_order**[ i ] | u(8) |
| } | |
| ..... | |
| } | |

*po_processing_ type[i]*: indicates a processing rule for the SEI processing order SEI message, or for other SEI messages associated with the SEI processing order SEI message, in a case that an SEI message associated with an i-th SEI message type in the SEI processing order SEI message cannot be processed. For example, *po_processing_type [i]* with the value equal to '1' indicates that the entire SEI processing order SEI message is ignored (that is, preferred processing orders among all SEI message types indicated in the SEI processing order SEI message are ignored); and with the value equal to '0' indicates that either the i-th SEI message and all SEI messages subsequent to the i-th SEI message are ignored, or processing orders of all SEI messages subsequent to a processing order of the i-th SEI message in the SEI processing order indication information are ignored.

It should be noted that a processing type may also be combined with other processing rules. That is, in a case that a value of *po_processing_type* is '1', the processing rules described in the third embodiment to the fifth embodiment can be further combined to determine a final processing rule for all SEI messages, or for processing orders of SEI messages, subsequent to a processing order of an SEI message failing to be processed and having an importance flag set to 'true' in the SEI processing order indication information.

*po_sei_wrapping_flag [i]*: indicates that the i-th SEI message, or the i-th SEI message type, is encapsulated in an SEI processing order nesting SEI message corresponding to the SEI processing order SEI message in a case that a value of *po_sei_wrapping_flag [i]* is equal to '1'; and indicates that the i-th SEI message exists independently and is not encapsulated in the SEI processing order nesting SEI message corresponding to the SEI processing order SEI message in a case that the value *of po_sei_wrapping_flag [i]* is equal to '0'.

*po_sei_importance_flag[i]*: indicates an importance degree determined by an encoder for an SEI message type with an index of i. The SEI message type with an index of i is indicated as important with the value of *po_sei_importance flag[i]* set to '1'; and the SEI message type with an index of *i* is indicated as unimportant with the value of *po_sei_importance_flag[i]* set to '0'.

*po_sei_payload_type[i]*: specifies the value of *payloadType* of an i-th type of SEI message. A type of an SEI message can be determined according to the value of *payloadType.*

*po_sei_processing_order[i]*: indicates a preferred processing order of the i-th type of SEI message for which preferred processing order information is provided in the SEI processing order SEI message.

| | |
|---|---|
| sei_processing_order( payloadSize ) { | **Descriptor** |
| **po_id** | u(8) |
| **po_num_sei_messages_minus2** | u(8) |
| **po_processing_type** | u(1) |
| for( i = 0, i < po_num_sei_messages_minus2 + 2; i++ ) { | |
| **po_sei_importance_flag**[ i ] | u(1) |
| if(!po_sei_importance_flag[ i ]) | |
| **po_sei_wrapping_flag**[ i ] | u(1) |
| **po_sei_payload_type**[ i ] | u(13) |
| **po_sei_processing_order**[ i ] | u(8) |
| } | |
| ...... | |
| } | |

*po_sei_wrapping_flag[i]*: the value of which set to '1', indicates that an i-th SEI message is encapsulated in an SEI processing order nesting SEI message corresponding to the SEI processing order SEI message, under the condition that an importance degree of the i-th SEI message type is not set to '1' (i.e., the i-th SEI message type is unimportant); the value of which set to '0', indicates that the i-th SEI message independently exists and is not encapsulated in the SEI processing order nesting SEI message corresponding to the SEI processing order SEI message.

In subsequent embodiments, these extensions will not be specifically described again. An encapsulation flag (e.g., *'po_sei_ wrapping_flag*') may be set for each SEI message in the SEI processing order SEI message, and may also be set only for an SEI message having an importance flag (e.g., *'po_sei importance _flag'*) set to 'false' (i.e., the second-type message discussed in the above embodiments) indicated by the SEI processing order SEI message.

According to a third embodiment, SEI processing order indication information is provided for a scenario where a processing rule is determined based on a dependency, where the SEI processing order indication information is an SEI processing order SEI message.

| | |
|---|---|
| sei_processing_order( payloadSize ) { | **Descriptor** |
| **po_id** | u(8) |
| **po_num_sei_messages_minus2** | u(8) |
| for( i = 0, i < po_num_sei_messages_minus2 + 2; i++ ) { | |
| **po_sei_wrapping_flag**[ i ] | u(1) |
| **po_sei_importance_flag**[ i ] | u(1) |
| **po_sei_payload_type**[ i ] | u(13) |
| **po_sei_dependence_flag**[ i ] | u(1) |
| **po_sei_processing_order**[ i ] | u(8) |
| } | |
| ..... | |
| } | |

Semantics (for a syntax element that is repeated in all subsequent embodiments, semantic information thereof is not described repeatedly, and the description of the syntax element provided in the second embodiment applies here):
*po_sei_dependence_flag[i]*: indicative of a dependency of an i-th SEI message on an important SEI message. The value of *'po_sei_dependence_flag[i]'* set to '0' indicates an independency of the i-th SEI message from the important SEI message; and the value of *'po_sei_dependence_flag[i]'* set to '1' indicates a presence of a dependency of the i-th SEI message on the important SEI message.

In this case, the processing rule is as follows: an SEI message is still normally processed according to a processing order even when an important SEI message has a processing failure, under the condition that the SEI message is independent from the important SEI message. An SEI message is ignored, or a processing order of the SEI message is ignored, under the condition that a dependency existing between the SEI message and an important SEI message having a processing failure.

| | |
|---|---|
| sei_processing_order( payloadSize ) { | **Descriptor** |
| **po_id** | u(8) |
| **po_num_sei_messages_minus2** | u(8) |
| **po_sei_dependence_present_flag** | u(1) |
| for( i = 0, i < po_num_sei_messages_minus2 + 2; i++ ) { | |
| **po_sei_wrapping_flag**[ i ] | u(1) |
| **po_sei_importance_flag**[ i ] | u(1) |
| **po_sei_payload_type**[ i ] | u(13) |
| if(po_num_sei_dependence_enable_flag) | |
| **po_sei_dependence_flag**[ i ] | u(1) |
| **po_sei_processing_order**[ i ] | u(8) |
| } | |
| ..... | |
| } | |

Semantics:
*po_sei_ dependence_present_flag*: the value of which set to '0' indicates that a dependency flag (e.g., *'po_sei_dependence_flag*') does not exist in the SEI processing order SEI message; and the value of which set to '1' indicates that a dependency flag (e.g., *'po_sei_dependence_flag')* exists in the SEI processing order SEI message.

The value of the dependency presence flag (e.g., *'po _sei_dependence_present_flag*') may depend on whether an SEI message having an importance flag set to 'true' exists among a plurality of SEI messages associated with the SEI processing order indication information. The value of the dependency presence flag is set to '1' if an SEI message having an importance flag set to 'true'; and the value of the dependency presence flag is set to '0' if no SEI message having an importance flag set to 'true' exists.

*po_sei_dependence_flag[i]*: identical to the description of the third embodiment described above.

| | |
|---|---|
| sei_processing_order( payloadSize ) { | **Descriptor** |
| **po_id** | u(8) |
| **po_num_sei_messages_minus2** | u(8) |
| **po_num_important_messages_minus1** | uv(e) |
| for( i = 0, i < po_num_sei_messages_minus2 + 2; i++ ) { | |
| **po_sei_wrapping_flag**[ i ] | u(1) |
| **po_sei_importance_flag**[ i ] | u(1) |
| **po_sei_payload_type**[ i ] | u(13) |
| **po_sei_dependence_flag**[ i ] | u(1) |
| if (po_num_important_messages_minus1>0 & po_sei_dependence_flag[ i ]) | |
| **po_sei_dependence_idx**[ i ] | uv(e) |
| **po_sei_processing_order**[ i ] | u(8) |
| } | |
| ...... | |
| } | |

Semantics:
*po_num_important_messages_minus1*: the value of which plus 1, indicates the number of SEI messages having the importance flags set to 'true' and associated with the SEI processing order indication information.
*po_sei_dependence_flag[i]*: indicative of a dependency of an i-th SEI message on an important SEI message. The value of '*po_sei_dependence_flag[i]'* set to '0', indicates that the i-th SEI message is independent from any important SEI message; and the value of which set to '1', indicates that the i-th SEI message is dependent on one important SEI message.
*po_sei_dependence_idx[i]*: indicative of an index of the important SEI message upon which the i-th SEI message depends.

It should be noted that, in this embodiment, one SEI message can only depend on one important SEI message. However, the present invention does not limit the number of important SEI messages upon which one SEI message type can depend. With the condition that one SEI message depends on a plurality of important SEI messages, a dependency index (e.g., '*po_sei_dependence_idx[i]*') may be provided to indicate each index of the plurality of important SEI messages upon which the i-th SEI message depends.

According to a fourth embodiment, SEI processing order indication information is provided for a scenario where a processing rule is determined based on a dependency strength on an important SEI message, where the SEI processing order indication information is an SEI processing order SEI message.

| | |
|---|---|
| sei_processing_order( payloadSize ) { | **Descriptor** |
| **po_id** | u(8) |
| **po_num_sei_messages_minus2** | u(8) |
| for( i = 0, i < po_num_sei_messages_minus2 + 2; i++ ) { | |
| **po_sei_wrapping_flag**[ i ] | u(1) |
| **po_sei_importance_flag**[ i ] | u(1) |
| **po_sei_payload_type**[ i ] | u(13) |
| if(po_sei_importance_flag[ i ]){ | |
| **po_sei_strong_dependent_flag**[ i ] | u(1) |
| if (!po_sei_strong_dependent_flag[ i ]) | |
| **po_num_dependent_sei_messages_minus1** | |
| } | |
| **po_sei_processing_order**[ i ] | u(8) |
| } | |
| ..... | |
| } | |

Semantics:
*po_sei _strong_influence_flag[i]*: the value of which set to '1', with the condition that an important SEI message associated therewith has a processing failure, indicates that each of the SEI messages having processing orders subsequent to a processing order of the important SEI message is ignored or the processing orders of the SEI messages is ignored; and the value of which set to '0', with the condition that an important SEI message associated therewith has a processing failure, a first number of SEI messages having processing orders subsequent to the processing order of the important SEI message are ignored or the processing orders of the SEI messages are ignored.

It should be noted that, in a case that a plurality of important SEI messages are present, *po*sei_*strong_influence_flag* with the value equal to '1' specifies that, when the important SEI message associated therewith cannot be processed, either all SEI messages subsequent to the processing order of the important SEI message and prior to a next SEI message with the value of *po_sei strong_influence_flag* equal to '1' are ignored, or processing orders of the SEI messages are ignored.

*po_num*_*influence_sei*_*messages_minus1*: the value of which plus 1 indicates the number of affected SEI messages, i.e., the number of SEI messages having processing orders subsequent to the processing order of the important SEI message that can be ignored or the number of processing orders of the SEI messages, under the condition that the important SEI message associated therewith has a processing failure.

According to a fifth embodiment, SEI processing order indication information is provided for a scenario where a processing rule is determined based on grouping information within the SEI processing order indication information, where the SEI processing order indication information is an SEI processing order SEI message.

| | |
|---|---|
| sei_processing_order( payloadSize ) { | **Descriptor** |
| **po_id** | u(8) |
| **po_num_sei_messages_minus2** | u(8) |
| for( i = 0, i < po_num_sei_messages_minus2 + 2; i++ ) { | |
| **po_sei_wrapping_flag**[ i ] | u(1) |
| **po_sei_importance_flag**[ i ] | u(1) |
| **po_sei_payload_type**[ i ] | u(13) |
| **po_sei_group_id**[ i ] | u(2) |
| **po_sei_processing_order**[ i ] | u(8) |
| } | |
| ...... | |
| } | |

Semantics:
*po_sei_group_id[i]*: indicative of an identifier of a group to which an i-th SEI message is grouped. An importance flag of at least one SEI message in each group is set to 'true' (that is, at least one first-type message is contained).

In this case, the processing rule is as follows: each of the SEI messages having the same group identifier as an important SEI message is ignored or the processing orders of the SEI messages are ignored, under the condition that the important SEI message has a processing failure.

| | |
|---|---|
| sei_processing_order( payloadSize ) { | **Descriptor** |
| **po_id** | u(8) |
| **po_num_sei_messages_minus2** | u(8) |
| **po_sei_group_present_flag** | u(1) |
| for( i = 0, i < po_num_sei_messages_minus2 + 2; i++ ) { | |
| **po_sei_wrapping_flag**[ i ] | u(1) |
| **po_sei_importance_flag**[ i ] | u(1) |
| **po_sei_payload_type**[ i ] | u(13) |
| if(po_sei_group_present_flag) | |
| **po_sei_group_id**[ i ] | u(2) |
| **po_sei_processing_order**[ i ] | u(8) |
| } | |
| ..... | |
| } | |

Semantics:
*po _sei_group_present_flag*: with the value set to '0' indicates that a group identifier (e.g., *'po_sei_group_id*') is not contained in a SEI processing order SEI message; and with the value set to '1' indicates that a group identifier (e.g., *'po_sei_group _id'*) is contained in a SEI processing order SEI message.

The group presence flag (e.g., *'po_sei_group_present_flag'*) depends on whether an SEI message with an importance flag set to 'true' is contained among a plurality of SEI messages associated with the SEI processing order indication information. A value of the group presence flag is set to '1' if an SEI message with an importance flag set to 'true' exists; and a value of the group presence flag is set to '0' if no SEI message with importance flag set to 'true' exists.

| | |
|---|---|
| sei_processing_order( payloadSize ) { | **Descriptor** |
| **po_id** | u(8) |
| **po_num_sei_messages_minus2** | u(8) |
| **po_processing_type** | |
| for( i = 0, i < ponum_sei_messages_minus2 + 2; i++ ) { | |
| **po_sei_wrapping_flag**[ i ] | u(1) |
| **po_sei_importance_flag**[ i ] | u(1) |
| **po_sei_payload_type**[ i ] | u(13) |
| if(po_processing_type) | |
| **po_sei_group_id**[ i ] | u(2) |
| **po_sei_processing_order**[ i ] | u(8) |
| } | |
| ...... | |
| } | |

Semantics:
*po_processing_type*: with the value set to '0' under the condition that an SEI message with an importance flag set to 'true' has a processing failure associated with the SEI processing order SEI message, the entire SEI processing order SEI message can be ignored; that is, preferred processing orders among all SEI messages associated with the SEI processing order SEI message are ignored; and with the value set to '1' under the condition that an SEI message type with an importance flag set to 'true' has a processing failure associated with the SEI processing order SEI message, a part of the SEI messages associated with the SEI processing order SEI message are ignored or the processing orders of the part of the SEI messages are ignored.

*po_sei_group_id[i]*: indicate a group identifier to which an i-th SEI message is grouped, if the processing type (e.g., *'po_processing_type*') has a value of '1'. An importance flag of at least one SEI message in each group is set to 'true' (e.g., '1').

In this case, the resulted processing rule is as follows: the entire SEI processing order SEI message is ignored, that is, preferred processing orders among all SEI messages associated with the SEI processing order SEI message are ignored, with the condition that the processing type (e.g., *'po_processing_type*') has a value of '0' and an important SEI message has a processing failure. Conversely, all SEI messages having the same group identifier as the important SEI message are ignored or the processing orders of these SEI messages are ignored, if the processing type (e.g., *'po_processing _ type'*) has a value of '1'.

According to a sixth embodiment, SEI processing order indication information is provided for a scenario where a processing rule is determined based on the SEI processing order indication information, where the SEI processing order indication information specifies an SEI processing order SEI message.

| | |
|---|---|
| sei_processing_order( payloadSize ) { | **Descriptor** |
| **po_id** | u(8) |
| **po_num_sei_messages_minus2** | u(8) |
| for( i = 0, i < po_num_sei_messages_minus2 + 2; i++ ) { | |
| **po_sei_wrapping_flag**[ i ] | u(1) |
| **po_sei_importance_flag**[ i ] | u(1) |
| if(po_sei_ importance_flag[ i ]) | |
| **po_sei_importance_degree_flag**[ i ] | |
| **po_sei_payload_type**[ i ] | u(13) |
| **po_sei_processing_order**[ i ] | u(8) |
| } | |
| ...... | |
| } | |

Semantic information:
Under the condition that an importance flag (e.g., *'po_*sei_*importance_flag[i]*') of an SEI message has a value of '1' , that is, when the SEI message is an important SEI message, an importance degree flag (e.g., *'po_sei_importance_degree_flag[i]*) can be further provided for the SEI message. The importance degree flag is equivalent to the processing degree *'flag po_sei_processing_degree_flag'.*

*po_sei_importance_degree_flag[i]*: with the value set to '1', and an important SEI message has a processing failure, it indicates that a decoder should ignore the entire SEI processing order SEI message, that is, preferred processing orders among all SEI messages associated with the SEI processing order SEI message are ignored; with the condition that the value of *'po_sei importance_degree_flag[i]'* set to '0', it indicates that the decoder should still process, according to the processing orders of each of the SEI messages having *'posei_processing_order[i]'* less than or equal to *'po_sei_processing_order[i]'* of the important SEI message having a processing failure as discussed above.

| | |
|---|---|
| sei_processing_order( payloadSize ) { | **Descriptor** |
| **po_id** | u(8) |
| **po_num_sei_messages_minus2** | u(8) |
| for( i = 0, i < po_num_sei_messages_minus2 + 2; i++ ) { | |
| **po_sei_wrapping_flag**[ i ] | u(1) |
| **po_sei_importance_flag**[ i ] | u(1) |
| if(po_sei_importance_flag[ i ]& ! po_sei_wrapping_flag[ i ]) | |
| **po_sei_importance_degree_flag**[ i ] | u(1) |
| **po_sei_payload_type**[ i ] | u(13) |
| **po_sei_processing_order**[ i ] | u(8) |
| } | |
| ...... | |
| } | |

A main difference from the sixth embodiment lies in that: in this embodiment, in a case that an importance flag (e.g., *po_sei_importance_flag [i]*) of an SEI message is equal to '1' (that is, the SEI message is an important SEI message), and an encapsulation flag of the important SEI message is equal to '0' (that is, the important SEI message is not encapsulated in a processing order nesting SEI message), an importance degree flag (e.g., *po_sei_importance_degree_flag [i]*) is further specified only for the SEI message, where the importance degree flag is equivalent to the processing degree flag *po_sei_processing_degree_flag.*

FIG. 5 depicts a flowchart illustrating a method for video processing applied to an encoder side according to a seventh embodiment of present invention. This embodiment is applied to a device configured to encode an input video picture. An input of the device is a source video picture. An output is a video picture bitstream or a media file.

At operation S410, processing orders of a plurality of SEI messages associated with a video picture are determined.

The plurality of SEI messages associated with the video picture refers to the information carried in the plurality of SEI messages will be used in decoding, displaying, or other related processes after video picture encoding. The plurality of SEI messages are a plurality of different types of SEI messages. The different types of SEI messages include but are not limited to: SEI messages with different message types (e.g., Payload Types), SEI messages with the same message type but not completely identical message contents, or SEI messages with different importance flags, and the like.

An encoder side may determine a preferred processing order of the plurality of SEI messages associated with the video picture according to an SEI message type, information carried in the SEI message, decoded reconstructed picture quality, a configuration file, or the like.

At operation S420, an SEI processing order indication message and a processing rule are determined according to the processing orders.

The SEI processing order indication message is indicative of the preferred processing orders of the plurality of SEI messages. The processing rule may be any processing rule as described in any one of the first embodiment to the fifth embodiment, or any combination of a plurality of the processing rules. The processing rule may be included in the SEI processing order indication message or may be determined according to the SEI processing order indication message.

In addition, the SEI processing order indication message may further include information related to one or more of, the number of associated SEI messages, the types of the associated SEI messages, an importance flag of an SEI message, an encapsulation flag of an SEI message, and/or the like.

The processing rule is indicative of, when non-processable SEI message exists among the plurality of SEI messages, a processing method for the preferred processing orders in the SEI processing order indication message or a processing method for the SEI messages other than the non-processable SEI message among the plurality of SEI messages. Further, only in a case that an importance flag of a non-processable SEI message is set to 'true', either a processing method for the preferred processing order within the SEI processing order indication message or a processing method for other SEI messages among the plurality of SEI messages excluding the non-processable SEI message is determined based on the processing rule.

At operation S430, the SEI processing order indication message and the processing rule are sent to a decoder side.

The SEI processing order indication message and the processing rule may be added to an encoded bitstream of the video picture and transmitted to the decoder side together. Alternatively, the SEI processing order indication message and the processing rule may be transmitted to the decoder side independently as one bitstream. Alternatively, the SEI processing order indication message and the processing rule may be transmitted to the decoder side through any other method.

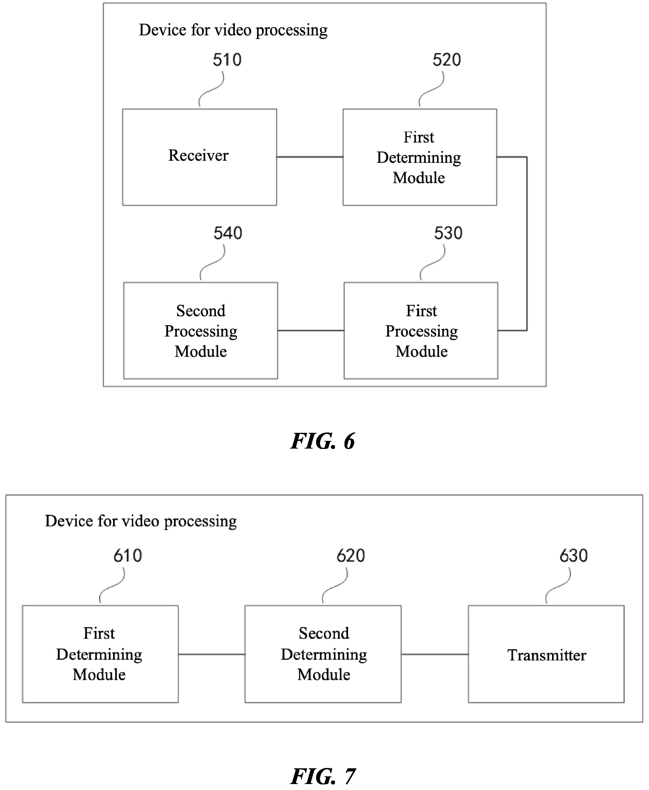

FIG. 6 depicts a schematic block diagram showing a device for video processing according to an embodiment of the present invention. This embodiment is applied to a decoder side. As shown in FIG. 6, the device for video processing in this embodiment includes a receiver 510, a first determining module 520, a first processing module 530, and a second processing module 540.

The receiver 510 is configured to receive a video picture bitstream along with first order indication information corresponding to the video picture bitstream. The first order indication information is indicative of a processing order of each of the messages in a message set that includes at least one first-type message.

The first determining module 520 is configured to determine a message processing rule for each of the messages associated with the first order indication information, in response to a determination that the processing of at least one first-type message fails.

The first processing module 530 is configured to process the first order indication information according to a message processing rule.

The second processing module 540 is configured to process the video picture bitstream according to the processed first order indication information.

In an embodiment, the message is a first-type message if the importance flag of the message is a first flag.

The message is a second-type message, if the importance flag of the message is a second flag.

In an embodiment, determining the message processing rule for each of the messages associated with the first order indication information includes at least one of:
determining the message processing rule for each associated message according to a processing type contained in the first order indication information;
determining the message processing rule for each associated message according to a dependency contained in the first order indication information;
determining the message processing rule for each associated message according to a dependency strength on the first-type message in the first order indication information;
determining the message processing rule for each associated message according to grouping information contained in the first order indication information; or
determining the message processing rule for each associated message according to an importance degree flag contained in the first order indication information.

In an embodiment, processing the first order indication information according to the message processing rule includes:
- ignoring a processing order of each message having a process order subsequent to the first-type message associated with the first order indication information, in response to determining that the processing type in the first order indication information is associated with the first flag and the processing on the first-type message fails; and
- ignoring the entire first order indication information, in response to determining that the processing type in the first order indication information is associated with the second flag and the processing on the first-type message fails.

In an embodiment, processing the first order indication information according to the message processing rule includes:
in case that the processing type in the first order indication information is indicated by the first flag and an encapsulation flag is the second flag, preserving the processing orders of messages having processing orders prior to the processing order of the first-type message in the first order indication information, if the processing on the first-type message fails;
ignoring the first-type message in the first order indication information, if the processing on the first-type message fails with the condition that the processing type in the first order indication information is indicated by the first flag and the encapsulation flag is the first flag;
ignoring the entire first order indication information, if the processing on a first-type message fails with the condition that the processing type in the first order indication information is indicated by the second flag.

In an embodiment, processing the first order indication information according to the message processing rule includes:
ignoring the processing orders of all messages having a dependency with the first-type message in the first order indication information, under the condition that the first-type message associated with the first order indication information has processing failure.

In an embodiment, processing the first order indication information according to the message processing rule includes:
ignoring processing orders of a first number of messages subsequent to the first-type message in the first order indication information, under the condition that a dependency strength on the first-type message associated with the first order indication information is indicated by the second flag;
ignoring the entire first order indication information, under the condition that the dependency strength on the first-type message associated with the first order indication information is indicated by the first flag.

In an embodiment, processing the first order indication information according to the message processing rule includes:
ignoring the processing orders of all messages having the same grouping information corresponding to the first-type message in the first order indication information, under the condition that the first-type message associated with the first order indication information has processing failure.

In an embodiment, processing the first order indication information according to the message processing rule includes:
ignoring the entire first order indication information, under the condition that an importance degree flag in the first order indication information is the first flag and the first-type message has processing failure;
preserving the processing orders of messages prior to a processing order corresponding to the first-type message in the first order indication information, or ignoring the processing orders of messages subsequent to the processing order corresponding to the first-type message in the first order indication information, under the condition that the importance degree flag in the first order indication information is the second flag, an encapsulation flag is the second flag, and the first-type message has processing failure;
ignoring the first-type message having processing failure in the first order indication information, under the condition that the importance degree flag in the first order indication information is the second flag, the encapsulation flag is the first flag, and the first-type message has processing failure.

In an embodiment, the first order indication information includes at least the following parameters: a message identifier, the number of messages, a message nesting situation, an importance flag, a message type, a processing order of a message corresponding to each message type, and an encapsulation flag.

In an embodiment, the first order indication information further includes one of the following parameters: a dependency strength on the first-type message, a dependency, grouping information, a processing type, or an importance degree flag.

The device for video processing set forth in this embodiment is configured to implement the method for video processing applied to the decoder side in the embodiment shown in FIG. 2. The device for video processing in this embodiment has similar implementation principles and technical effects, and the description thereof is not described repeatedly here.

FIG. 7 depicts a schematic block diagram showing a device for video processing according to another embodiment of the present invention. This embodiment is applied to an encoder side. As shown in FIG. 7, the device for video processing in this embodiment includes: a first determining module 610, a second determining module 620, and a transmitter 630.

The first determining module 610 is configured to determine a processing order for each of the messages in a message set associated with a source picture.

The second determining module 620 is configured to determine corresponding first order indication information based on the processing order of each of the messages. The first order indication information is indicative of a processing order of each of the messages in a message set that includes at least one first-type message.

The transmitter 630 is configured to append the first order indication information to a video picture bitstream corresponding to the source picture, and to transmit the video picture bitstream to a decoder side.

In an embodiment, the message is a first-type message if the importance flag of the message is a first flag.

The message is a second-type message, if the importance flag of the message is a second flag.

In an embodiment, a corresponding encapsulation flag is configured for a message whose importance flag is the second flag in the first order indication information.

In an embodiment, a corresponding dependency presence flag is configured as the first flag, under the condition that the number of first-type messages associated with the first order indication information is greater than or equal to 1.

The corresponding dependency presence flag is configured as the second flag, under the condition that no first-type messages are associated with the first order indication information.

In an embodiment, a dependency message index of the depended first-type message is configured for a message having a first flag as the dependency flag, under the condition that the number of first-type messages associated with the first order indication information is greater than 1.

In an embodiment, a group presence flag is configured as the first flag, under the condition that the number of messages having the first flags as importance flags in the first order indication information is greater than or equal to 1;
the group presence flag is configured as the second flag, under the condition that the number of messages having the first flags as importance flags associated with the first order indication information is 0.

In an embodiment, a group identifier is configured for each message under the condition that the group presence flag is the first flag. Specifically, at least one first-type message is included in a group corresponding to each group identifier.

In an embodiment, a corresponding importance degree flag is configured for the first-type message having a second flag as the encapsulation flag.

In an embodiment, the first order indication information includes at least the following parameters: a message identifier, the number of messages, a message nesting situation, an importance flag, a message type, a processing order of a message corresponding to each message type, and an encapsulation flag.

In an embodiment, the first order indication information further includes one of the following parameters: a dependency strength on the first-type message, a dependency, grouping information, a processing type, or an importance degree flag.

The device for video processing set forth in this embodiment is configured to implement the method for video processing applied to the encoder side in the embodiment shown in FIG. 3. The device for video processing in this embodiment has similar implementation principles and technical effects, and the description thereof is not described repeatedly here.

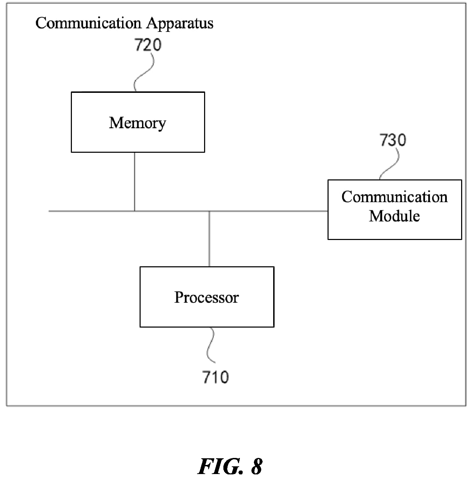

FIG. 8 depicts a schematic block diagram showing a communication apparatus according to an embodiment of the present invention. As shown in FIG. 8, the apparatus includes a processor 710, a memory 720, and a communication module 730. One or more processors 710 may be provided within the apparatus, while FIG. 8 shows one processor 710 by way of example. One or more memories 720 may be provided within the apparatus, while FIG. 8 shows one memory 720 by way of example. Processor 710, memory 720 and communication device 730 can be connected by a bus or other means. The connection is shown as bus by way of an example in FIG. 8. In this embodiment, the apparatus may be a decoder side or an encoder side.

The memory 720, serving as a computer-readable storage medium, is configured to store software programs, computer-executable programs, and modules, such as program instructions or modules for implementing the device in any embodiment of the present invention (e.g., the receiver 510, the first determining module 520, the first processing module 530, and the second processing module 540 within the device for video processing at the decoder side). The memory 720 may generally include a program storage section and a data storage section, in which the program storage section may store an operating system and application programs for performing at least one operation, and data storage section may store data created according to the operation of the apparatus, or the like. In addition, the memory 720 can include a high-speed random-access memory and a nonvolatile memory, such as at least one disk memory device, a flash memory device, or other nonvolatile solid-state memory devices. In some implementations, the memory 720 may include memories remotely located relative to the processor 710, and these remote memories may be connected to the apparatus through a network. Examples of the above networks include, but are not limited to, the Internet, intranet, local area network, mobile communication network, and combinations thereof.

In a case where the communication apparatus functions as the decoder side, the apparatus provided herein is configured to perform method for video processing at the decoder-side set forth in any of the embodiments above, achieving corresponding functions and technical effects.

In a case where the communication apparatus functions as the encoder side, the apparatus provided herein is configured to perform method for video processing at the encoder-side set forth in any of the embodiments above, achieving corresponding functions and technical effects.

According to an embodiment of the present invention, a storage medium is provided. The medium stores at least one computer program which, when executed by a processor, causes the processor to carry out a method for video processing applied to a decoder. The method includes: receiving a video picture bitstream along with first order indication information corresponding to the video picture bitstream; where the first order indication information is indicative of a processing order of each of a plurality of messages in a message set that includes at least one first-type message; determining a message processing rule for each message associated with the first order indication information, in response to a determination that the at least one first-type message has processing failure; processing the first order indication information according to a message processing rule; and processing the video picture bitstream according to the processed first order indication information.

According to an embodiment of the present invention, a storage medium is provided. The medium stores at least one computer program which, when executed by a processor, causes the processor to carry out a method for video processing applied to an encoder. The method includes: determining a processing order for each of a plurality of messages in a message set associated with a source picture; determining a respective first order indication information based on a processing order of each of the messages; where the first order indication information is indicative of a processing order of each of a plurality of messages in a message set that includes at least one first-type message; appending the first order indication information to a video picture bitstream corresponding to the source picture, and transmitting the video picture bitstream to a decoder side.

It should be understood by those having ordinary skills in the art that the term user equipment covers any suitable type of wireless user equipment, such as a mobile phone, a portable data processing device, a portable web browser, or a vehicle-mounted mobile station.

Generally, various embodiments of the present invention may be implemented as hardware or dedicated circuits, software, logic or any suitable combination thereof. For example, some aspects may be implemented as hardware, while other aspects may be implemented as firmware or software executable by a controller, microprocessor or other computing device, although the present invention is not limited thereto.

Some embodiments of the present invention can be implemented by a data processor of a mobile device executing computer program instructions, for example, in a processor entity, or by hardware, or by a combination of software and hardware. Computer program instructions can be assembly instructions, instruction set architecture (ISA) instructions, machine instructions, machine-related instructions, microcode, firmware instructions, state setting data, or source code or object code written in any combination of one or more programming languages.

The block diagram of any logic flow in the drawings of the present invention may represent program process, or may represent interconnected logic circuits, modules and functions, or may represent the combination of program process and logic circuits, modules and functions. Computer programs can be stored in the memory. The memory can be of any type suitable for the local technical environment and can be realized with any suitable data storage technology, such as, but not limited to, read-only memory (ROM), random access memory (RAM), optical memory devices and systems like Digital Video Disc(DVD), or Compact Disk (CD) etc. Computer-readable media may include non-transitory storage media. The data processor can be of any type suitable for the local technical environment, including, without limitation, a general-purpose computer, a special-purpose computer, a microprocessor, a Digital Signal Processor (DSP), an Application Specific Integrated Circuit (ASIC), a Field-Programmable Gate Array (FPGA), or a processor based on a multi-core processor architecture.

Some embodiments of the present invention are described above. However, the present invention is not limited by those embodiments described. Various modifications and alternations can be made by those having ordinary skill in the art. Any modifications, equivalents, alternations, or improvements, made within the concepts of the present invention shall be included in the scope of protection of the present invention.

## Claims

1. A method for video processing, applied to a decoder, the method comprising:
receiving a video picture bitstream along with first order indication information corresponding to the video picture bitstream; wherein the first order indication information is indicative of a processing order of each of a plurality of messages in a message set that comprises one or more first-type messages;
determining a message processing rule for each message associated with the first order indication information, in response to determining that at least one of the one or more first-type messages has processing failure;
processing the first order indication information according to the message processing rule; and
processing the video picture bitstream according to the processed first order indication information.

2. The method as claimed in claim 1, wherein a message among the plurality of messages is identified to be a first-type message, in response to an importance flag of the message being a first importance flag; or
the message is identified to be a second-type message, in response to the importance flag of the message being a second importance flag.

3. The method as claimed in claim 1, wherein determining the message processing rule for each message associated with the first order indication information comprises at least one of:
determining the message processing rule for each associated message according to a processing type contained in the first order indication information;
determining the message processing rule for each associated message according to a dependency contained in the first order indication information;
determining the message processing rule for each associated message according to a dependency strength on a first-type message contained in the first order indication information;
determining the message processing rule for each associated message according to grouping information contained in the first order indication information; or
determining the message processing rule for each associated message according to an importance degree flag contained in the first order indication information.

4. The method as claimed in claim 1, wherein processing the first order indication information according to the message processing rule comprises:
ignoring a processing order of each message subsequent to the first-type message in the first order indication information, in response to determining that a processing type in the first order indication information is indicated by a first type flag and the first-type message of the first-type message subset has a processing failure; and
ignoring the first order indication information, in response to determining that the processing type in the first order indication information is indicated by a second flag and the first-type message has processing failure.

5. The method as claimed in claim 1, wherein processing the first order indication information according to the message processing rule comprises:
in response to determining that a processing type contained in the first order indication information is indicated by a first type flag and an encapsulation flag is a second encapsulation flag, and further in response to determining that the first-type message has processing failure, preserving in the first order indication information, processing orders of messages having processing orders prior to processing order of the first-type message;
ignoring the first-type message having processing failure in the first order indication information, in response to determining that the first-type message has processing failure and that the processing type contained in the first order indication information is indicated by a first type flag and the encapsulation flag is a first encapsulation flag; and
ignoring the first order indication information, in response to determining that the processing type contained in the first order indication information is indicated by the second type flag and the first-type message has processing failure.

6. The method as claimed in claim 1, wherein processing the first order indication information according to the message processing rule comprises:
ignoring in the first order indication information, processing order of each message having a dependency with a first-type message associated with the first order indication information, in response to determining that the first-type message associated with the first order indication information has processing failure.

7. The method as claimed in claim 1, wherein processing the first order indication information according to the message processing rule comprises:
ignoring in the first order indication information, processing orders of a first number of messages subsequent to a first-type message associated with the first order indication information, in response to determining that a dependency strength on the first-type message associated with the first order indication information is indicated by a second dependency strength flag; and
ignoring the first order indication information, in response to determining that the dependency strength on the first-type message associated with the first order indication information is indicated by a first dependency strength flag.

8. The method as claimed in claim 1, wherein processing the first order indication information according to the message processing rule comprises:
ignoring processing order of each message having a same grouping information as a first-type message associated with the first order indication information in response to determining that the first-type message associated with the first order indication information has processing failure.

9. The method as claimed in claim 1, wherein processing the first order indication information according to the message processing rule comprises one of:
ignoring the first order indication information, in response to determining that an importance degree flag contained in the first order indication information is a first importance degree flag and the first-type message has processing failure;
preserving in the first order indication information, processing orders of messages prior to a processing order corresponding to the first-type message, or ignoring in the first order indication information, the processing orders of messages subsequent to the processing order corresponding to the first-type message, in response to determining that an importance degree flag contained in the first order indication information is a second importance degree flag, an encapsulation flag is the second encapsulation flag, and the first-type message has processing failure; and
ignoring a first-type message having processing failure in the first order indication information, in response to determining the importance degree flag contained in the first order indication information is the second importance degree flag, the encapsulation flag is the first encapsulation flag, and the first-type message has processing failure.

10. The method as claimed in claim 1, wherein the first order indication information comprises at least one of, a message identifier, a number of messages, a message nesting situation, an importance flag, a message type, a processing order of a message corresponding to each message type, or an encapsulation flag.

11. The method as claimed in claim 10, wherein the first order indication information further comprises one of, a dependency strength on a first-type message, a dependency, grouping information, a processing type, or an importance degree flag.

12. A method for video processing, applied to an encoder, the method comprising:
determining a processing order for each of a plurality of messages in a message set associated with a source picture;
determining a respective first order indication information based on a processing order of each of the messages; wherein the first order indication information is indicative of a processing order of each of the plurality of messages in the message set that comprises at least one first-type message; and
appending the first order indication information to a video picture bitstream corresponding to the source picture, and transmitting the video picture bitstream to a decoder side.

13. The method as claimed in claim 12, wherein,
a message among the plurality of messages is identified to be a first-type message, in response to an importance flag of the message being a first importance flag; or
the message is identified to be a second-type message, in response to the importance flag of the message being a second importance flag.

14. The method as claimed in claim 12, wherein, a respective encapsulation flag is configured for a message associated with the first order indication information that has a second importance flag as an importance flag.

15. The method as claimed in claim 12, wherein, a respective dependency presence flag is configured as a first dependency presence flag, in response to determining that a number of the at least one first-type message associated with the first order indication information is greater than or equal to 1; and
the respective dependency presence flag is configured as a second dependency presence flag, in response to determining that no first-type messages are associated with the first order indication information.

16. The method as claimed in claim 12, wherein, a dependency message index of a first-type message on which a message depends, among the at least one first-type message is configured for the message having a first dependency flag as a dependency flag, in response to determining a number of the at least one first-type messages associated with the first order indication information is greater than 1.

17. The method as claimed in claim 12, wherein a group presence flag is configured as a first group presence flag, in response to determining that a number of messages associated with the first order indication information that have first importance flags as importance flags is greater than or equal to 1; and
the group presence flag is configured as a second group presence flag, in response to determining that the number of messages associated with the first order indication information that have first importance flags as importance flags is 0.

18. The method as claimed in claim 17, wherein a group identifier is configured for each of the messages in response to determining that the group presence flag is the first group presence flag; wherein at least one first-type message is contained in a group corresponding to each group identifier.

19. The method as claimed in claim 14, wherein, a respective importance degree flag is configured for a first-type message having a second encapsulation flag as an encapsulation flag, among the at least one first-type message.

20. The method as claimed in claim 12, wherein, the first order indication information comprises at least one of, a message identifier, a number of messages, a message nesting situation, an importance flag, a message type, a processing order of a message corresponding to each message type, or an encapsulation flag.

21. The method as claimed in claim 20, wherein, the first order indication information further comprises one of, a dependency strength on a first-type message among the at least one first-type message, a dependency, grouping information, a processing type, or an importance degree flag.

22. A communication apparatus, comprising: a memory, and at least one processor; wherein, the memory is configured to store at least one program which, when executed by the at least one processor, causes the at least one processor to carry out the method as claimed in any one of claims 1 to 11, or the method as claimed in any one of claims 12 to 21.

23. A computer-readable storage medium storing at least one computer program which, when executed by a computer, causes the computer to carry out the method as claimed in any one of claims 1 to 11, or the method as claimed in any one of claims 12 to 21.
